# EUROPEAN PATENT SPECIFICATION

(11) **EP 2 913 750 B1**
(45) Date of publication and mention of the grant of the patent: **27.03.2019**
(21) Application number: 13850460.0
(22) Date of filing: 21.10.2013
(51) Int. Cl.: G06F 9/445

(54) **INFORMATION PROCESSING DEVICE, BROADCAST RECEPTION DEVICE, AND SOFTWARE-DATA UPDATE METHOD**
INFORMATIONSVERARBEITUNGSVORRICHTUNG, RUNDFUNKEMPFANGSVORRICHTUNG UND VERFAHREN ZUR AKTUALISIERUNG VON SOFTWAREDATEN
DISPOSITIF DE TRAITEMENT D'INFORMATION, DISPOSITIF DE RÉCEPTION DE DIFFUSION ET PROCÉDÉ DE MISE À JOUR DE DONNÉES DE LOGICIEL

(30) Priority: 29.10.2012 JP 2012238156
(43) Date of publication of application: 02.09.2015
(73) Proprietor: Mitsubishi Electric Corporation, Tokyo 100-8310 (JP)
(72) Inventor: YUKAWA, Jun, Tokyo 100-8310 (JP); TOKUYAMA, Satoru, Tokyo 100-8310 (JP); UEDA, Kensuke, Tokyo 100-8310 (JP); MIKI, Satoko, Tokyo 100-8310 (JP)
(74) Representative: Hoffmann Eitle
(86) International application number: PCT/JP2013/006207
(87) International publication number: WO 2014/068890

(56) References cited:
- JP-A- 2001 022 464
- JP-A- 2002 268 903
- JP-A- 2007 251 760
- JP-A- 2011 113 293
- JP-A- 2012 155 582
- US-A1- 2011 107 020
- US-B1- 6 611 919

## Description

### TECHNICAL FIELD

The present invention relates to an information processing device, a broadcast reception device, and a software data update method.

### BACKGROUND ART

In digital broadcasting, to provide a variety of services, in addition to video information and audio information, additional information is transmitted for purposes such as data broadcasts that provide text information and still pictures and bidirectional interactive functions based on input of information from the viewer. The application programs used to implement the provision of these services are more highly functional and more multifunctional then in the past. In broadcast reception devices, a general-purpose operating system (OS) is generally used to execute the application programs. In the present application, the term 'software' will be used to designate programs in general, including the OS and application programs, and the electronic data representing the software will be referred to as 'software data'.

In an information processing device of this type, which uses an OS to perform broadcast reception, the items of software data corresponding to the services such as the above that are particular to digital broadcasting are transferred from the nonvolatile memory in which they are stored to a working RAM (Random Access Memory) and executed by a CPU (Central Processing Unit). In the execution of the software, first a preparatory process (initialization process) necessary for launching the software is carried out, after which the processing of the individual functions is carried out. For some of the functions implemented by the software, a long time may be needed for the transfer process from the nonvolatile memory to RAM and for the initialization process. As a way to shorten the lengthy transfer process time, compression and decompression processes may be carried out on the software data.

The difference between the quantity of data before and after compression, divided by the quantity of data before compression, is referred to as the compression ratio. Data compression processes are classified as lossy compression processes, in which the data that have been compressed and then decompressed differ from the original data, and lossless compression processes, in which the data that have been compressed and then decompressed are identical to the original data. In general, with lossy compression a high compression ratio can be achieved but the original data cannot be restored, so lossy compression is used for data such as audio data, video data, and other data where the decompressed data do not have to match the original data exactly. For data such as the software data of programs, however, lossless compression processes are used because the original data can be restored.

In the compression and decompression of software data, first the software data are losslessly compressed and the compressed software data are saved in the nonvolatile memory. At device startup, the compressed software data are read from the nonvolatile memory and transferred to the RAM, and the transferred software data are executed after being decompressed and written into the RAM. Compared with the case in which compression and decompression are not performed, extra time is required for the decompression process at startup, but the quantity of software data that is transferred is reduced, so less time is required for the transfer. If an appropriate compression process is selected, the time required for the data transfer process as a whole, from the start of the process of transferring the compressed software data to the completion of the decompression of the software data, can be shorter than the transfer process time of non-compressed software data, and shortening of the startup time can therefore can be anticipated.

Various compression algorithms and compression tools have been devised for lossless compression processing, and these compression algorithms and tools have differing compression ratios. Among these compression algorithms and compression tools, there are some, such as gzip (GNU ZIP) and bzip2, that permit the compression ratio to be changed at the time of compression. In general, when the compression ratio is increased, more calculation becomes necessary in the compression or decompression process. Therefore, when a device is started up with software data on which a compression process with a high compression ratio has been carried out, the amount of computation required for the process of decompressing the software data at the time of startup increases and the load on the CPU becomes greater. Accordingly, when the startup process involves the compression and decompression of software data, if a compression process with a high compression ratio is executed, the data transfer time is shortened, but since the time required for the decompression process is lengthened, it may extend beyond the transfer processing time for non-compressed software data. Raising the software data compression ratio thus does not necessarily enable the transfer processing time to be shortened.

Further background art is disclosed in US 2011/0107020 A1, specifically an embedded device which is hibernated by storing state data of the embedded device to a non-volatile data storage medium, and powering off the embedded device. The embedded device is later woken up in response to the detection of a wakeup event from a wakeup source. The state data stored in the RAM of the embedded device comprises data in one or more registers of a Central Processing Unit (CPU) of the embedded device, one or more registers of a system-on-chip (SOC) of the embedded device, and the system and applications code and data. Waking the embedded device comprises loading, from the non-volatile data storage medium, initial memory sections that are used to run a kernel of the embedded device. State data that is stored in the RAM of a system may be compressed by dividing the RAM into a plurality of sections and independently choosing, for each section in the plurality of sections, a corresponding compression arithmetic.

Devices and methods for shortening the overall transfer processing time have therefore been devised. In a conventional information processing device, data are compressed in section units that match the section units in which the data are transferred, whereby at startup, the data transfer timing matches the timing of the decompression process, random access performance is improved, and a higher compression ratio is realized.

### PRIOR ART REFERENCES

### PATENT REFERENCES

Patent reference 1: Japanese patent application publication No. 2010-277495

### SUMMARY OF THE INVENTION

After an information processing device is powered on, however, the CPU is under an elevated processing load because of initialization processing tasks and the like. When a decompression process is performed while the CPU is under an elevated processing load because of initialization processing tasks and the like, the time until the software data become usable is lengthened in comparison with the case in which the decompression process is simply performed alone. The higher the compression ratio, the more the required transfer time can be shortened, but the required time for decompression of the software data is also lengthened. Another problem that may occur is that the other initialization processing tasks of the device are held up.

The present invention addresses the above problems with the object of providing an information processing device, a broadcast reception device, and a software data update
method that can shorten the time from power-on until given functions become executable.

An information processing device according to the present invention includes: a processing load information measurement unit for measuring a processing load imposed by a transfer process and a decompression process when executed according to a given schedule by a computation unit, the transfer process including reading compressed software data from a first storage unit in which the compressed software data are stored and, before the computation unit executes the software data, writing the software data into a second storage unit in which the software data are temporarily stored, the decompression process decompressing the software data read from the first storage unit; a compression process determination unit for, on a basis of processing load information obtained by measurement in the processing load information measurement unit, selecting a candidate compression type and compression ratio to be applied to the software data when written into the first storage unit, calculating the processing load on the computation unit when the computation unit executes the transfer process and the decompression process on the software data, to which the selected compression type and compression ratio have been applied, and calculating a data transfer efficiency, and determining that the selected compression type and compression ratio will be used in a compression process for compressing the software data if, from the calculated processing load and data transfer efficiency, data transfer time can be shortened; and a data compression unit for causing execution of the compression process using the compression type and compression ratio determined by the compression process determination unit and a process of
writing the compressed software data, on which the compression process has been executed, into the first storage unit.

A software update method according to the present invention includes: a processing load information measurement process for measuring a processing load imposed by a transfer process and a decompression process when executed according to a given schedule by a computation unit, the transfer process including reading compressed software data from a first storage unit in which the compressed software data are stored and, before the computation unit executes the software data, writing the software data into a second storage unit in which the software data are temporarily stored, the decompression process decompressing the software data read from the first storage unit; a candidate selection process for, on a basis of processing load information obtained by measurement in the processing load information measurement process, selecting a candidate
compression type and compression ratio to be applied to the software data when written into the first storage unit; a calculation process for calculating the processing load on the computation unit and the data transfer efficiency; a determination process for determining that the selected compression type and compression ratio will be used in a process of compressing the software data if, from the processing load and data transfer efficiency calculated by the calculation process, data transfer time can be shortened; and a data compression process for causing execution of the compression process using the compression type and compression ratio determined by the compression process determination unit and a process of writing the compressed software data, on which the compression process has been executed, into the first storage unit.

A software update method according to the present invention includes: a measurement process for measuring a processing load imposed on a computation unit when a decompression process is carried out on compressed software read from a first storage unit storing software data; an inference process for inferring a time required for the computation unit to execute the decompression process under the imposed processing load, for various compression types and compression ratios; a determination process for determining the compression type and compression ratio with the shortest inferred time in the inference process as the compression type and compression ratio to be applied to the software stored in the first storage unit; and a data compression process for causing execution of a compression process using the determined compression type and compression ratio, and a writing process for writing the compressed software data, on which the compression process has been executed, into the first storage unit.

Because an information processing device according to the present invention includes: a processing load information measurement unit for measuring a processing load imposed by a transfer process and a decompression process when executed according to a given schedule by a computation unit, the transfer process including reading compressed software data from a first storage unit in which the compressed software data are stored and, before the computation unit executes the software data, writing the software data into a second storage unit in which the software data are temporarily stored, the decompression process decompressing the software data read from the first storage unit; a compression process determination unit for, on a basis of processing load information obtained by measurement in the processing load information measurement unit, selecting a candidate compression type and compression ratio to be applied to the software data when written into the first storage unit, calculating the processing load on the computation unit when the computation unit executes the transfer process and the decompression process on the software data, to which the selected compression type and compression ratio have been applied, and calculating a data transfer efficiency, and determining that the selected compression type and compression ratio will be used in a compression process for compressing the software data if, from the calculated processing load and data transfer efficiency, the data transfer time can be shortened; and a data compression unit for causing execution of the compression process using the compression type and compression ratio determined by the compression process determination unit and a process of writing the compressed software data, on which the compression process has been
executed, into the first storage unit, the combined time including the time taken to transfer software data from a nonvolatile memory to a random access memory and the time taken to decompress the software data, if the software data are compressed, can be shortened.

Because a software update method according to the present invention includes: a processing load information measurement process for measuring a processing load imposed by a transfer process and a decompression process when executed according to a given schedule by a computation unit, the transfer process including reading compressed software data from a first storage unit in which the compressed software data are stored and, before the computation unit executes the software data, writing the software data into a second storage unit in which the software data are
temporarily stored, the decompression process decompressing the software data read from the first storage unit; a candidate selection process for, on a basis of processing load information obtained by measurement in the processing load information measurement process, selecting a candidate compression type and compression ratio to be applied to the software data when written into the first storage unit; a calculation process for calculating the processing load on the computation unit and the data transfer efficiency; a determination process for determining that the selected compression type and compression ratio will be used in a process of compressing the software data if, from the processing load and data transfer efficiency calculated by the calculation process, data transfer time can be shortened; and a data compression process for causing execution of the compression process using the compression type and compression ratio determined by the compression process determination unit and a process of writing the compressed software data, on which the compression process has been executed, into the first storage unit, the combined time including the time taken to transfer software data from a nonvolatile memory to a random access memory and the time taken to decompress the software data, if the software data are compressed, can be shortened.

Because a software update method according to the present invention includes: a measurement process for measuring a processing load imposed on a computation unit when a decompression process is carried out on compressed software read from a first storage unit storing software data; an inference process for inferring a time required for the computation unit to execute the decompression process under the imposed processing load, for various compression types and compression ratios; a determination process for determining the compression type and compression ratio with the shortest inferred time in the inference process as the compression type and compression ratio to be applied to the software when stored in the first storage unit; and a data compression process for causing execution of a compression process using the determined compression type and compression ratio and a writing process for writing the compressed software data, on which the compression process has been executed, into the first storage unit, the combined time including the time taken to transfer software data from a nonvolatile memory to a random access memory and the time taken to decompress the software data, if the software data are compressed, can be shortened.

### BRIEF DESCRIPTION OF THE DRAWINGS

FIG. 1 is a block diagram showing an example of the configuration of a broadcast reception device according to a first embodiment of the present invention.
FIG. 2 is a block diagram showing, in a simplified form, the configuration of the broadcast reception device shown in FIG. 1.
FIG. 3 is a flowchart illustrating the software startup process executed by the broadcast reception device.
FIG. 4 is a flowchart illustrating the software update process executed by the broadcast reception device.
FIGs. 5(a) and 5(b) are explanatory diagrams illustrating the load on, or usage ratio of, the main control unit of the broadcast reception device.
FIGs. 6(a) and 6(b) are explanatory diagrams illustrating the data transfer efficiency of the broadcast reception device.
FIGs. 7(a) and 7(b) are explanatory diagrams showing
   information about the processing load on the broadcast reception device according to the first embodiment over time.
FIGs. 8(a) and 8(b) are explanatory diagrams showing information about the processing load over time when the compression type and compression ratio of the broadcast reception device according to the first embodiment are changed.
FIGs. 9(a) and 9(b) are explanatory diagrams illustrating processing time for different cases of compression type and compression ratio in a broadcast reception device according to the second embodiment.

### DESCRIPTION OF EMBODIMENTS

### First Embodiment

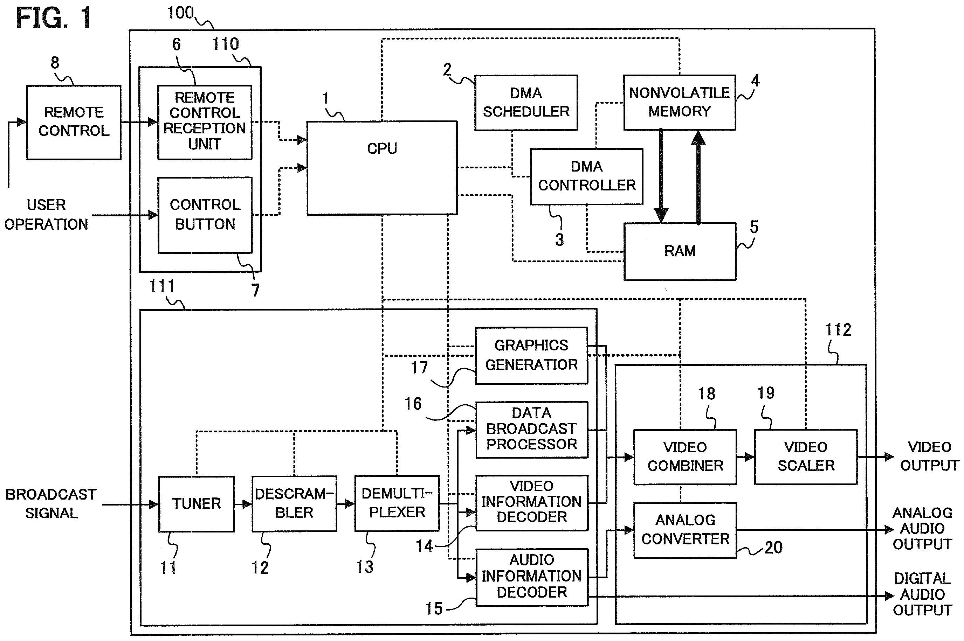

In FIG. 1, which is a block diagram showing an example of the configuration of a broadcast reception device according to a first embodiment of the present invention, the broadcast reception device 100 includes a CPU 1 (computation unit) for controlling the broadcast reception device 100 as a whole, a DMA (direct memory access) controller 3 dedicated to data transfer in the broadcast reception device 100, a DMA scheduler 2 for determining the data transfer procedure to be executed by the DMA controller 3 and giving instructions to the DMA controller 3, a nonvolatile memory 4 (first storage unit) such as a ROM (read only memory) for holding software data, and a RAM 5 (second storage unit) for storing the data when the software data are executed. The nonvolatile memory 4 stores compressed software data or non-compressed software data. The RAM 5 stores software data that have been read from the nonvolatile memory 4 and will be executed by the CPU 1. The CPU 1 controls the components in the broadcast reception device 100 to decode a broadcast signal input to the broadcast reception device 100 and provide the user with
video information, audio information, and additional information based on the broadcast signal.

The broadcast reception device 100 is also provided with an operation input unit 110 having a control button 7 for direct input of user's instructions to the broadcast reception device 100, a remote control 8 for similar but remote input of the user's instructions and a remote control reception unit 6 for receiving instructions from the remote control 8. The configuration of the operation input unit 110 is not limited to the example in FIG. 1; any other configuration that enables input of user's instructions, such as a configuration including just the control button 7 or a configuration including just the remote control reception unit 6 that receives signals from the remote control 8, may be used instead. Also included are a tuner 11 for receiving the broadcast signal and bringing it into the broadcast reception device 100, a descrambler 12 for decrypting encrypted broadcast signals received by the tuner 11, a demultiplexer 13 for selecting a video signal, an audio signal, and additional signals such as data broadcast signals from the broadcast signal decrypted by the descrambler 12, a video information decoder 14 for decoding the video signal selected by the demultiplexer 13 to restore the original video information, an audio information decoder 15 for decoding the audio signal similarly selected by the demultiplexer 13 to restore the original audio information, a data broadcast processor 16 for inputting a data broadcast signal similarly selected by the demultiplexer 13 and generating data broadcast screen information, a graphics generator 17 for generating graphics screens for performing user operations, a video combiner 18 for superposing and combining the video information generated by the video information decoder 14, data broadcast processor 16, and graphics generator 17, a video scaler 19 for converting the video information combined by the video combiner 18 to a desired output format, and an analog converter 20 for converting the digital audio information output by the audio information decoder 15 to an analog audio signal.

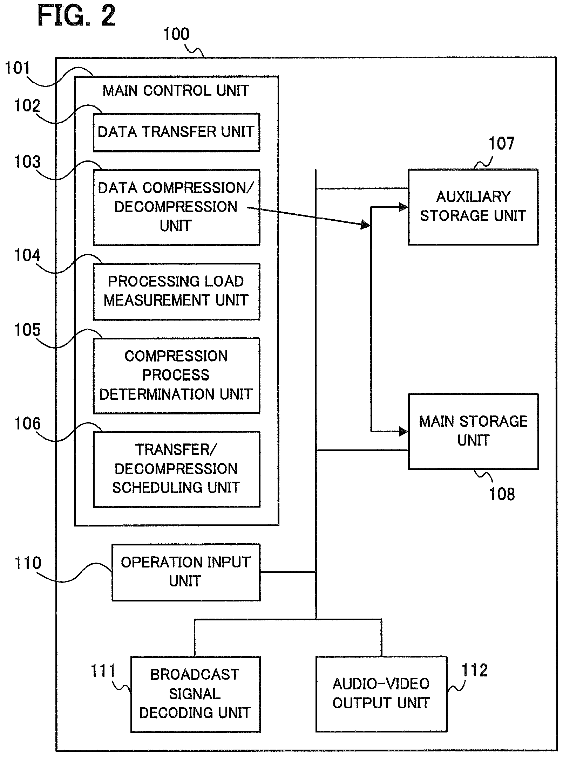

FIG. 2 is a block diagram showing, in a simplified form, the configuration of the broadcast reception device shown in FIG. 1. The blocks for receiving and decoding the broadcast signal, which include the tuner 11, descrambler 12, demultiplexer 13, video information decoder 14, audio information decoder 15, data broadcast processor 16, and graphics generator 17, are now denoted collectively as a broadcast signal decoding unit 111. The blocks for presenting the video information, audio information, and so on decrypted by the broadcast signal decoding unit 111 to the user, which include the video combiner 18, video scaler 19, and analog converter 20, are now denoted collectively as an audio-video output unit 112. Furthermore, the means in charge of overall control of the broadcast reception device 100, including the functions of the CPU 1, are now denoted as a main control unit 101; the means for performing data transfer in the broadcast reception device 100, including the functions of the DMA scheduler 2 and DMA controller 3, are denoted as a data transfer unit 102; the nonvolatile memory 4 is denoted as an auxiliary storage unit 107; and the RAM 5 is denoted as a main storage unit 108. The main control unit 101 includes a data compression/decompression unit 103 for executing a data compression process or decompression process, a processing load measurement storage unit 104 for measuring the processing load over time while the main control unit 101 is executing a process, a compression process determination unit 105 for calculating a data compression ratio, and a transfer/decompression scheduling unit 106 for determining a schedule for software data transfer and decompression.

Some or all of the functions of the data transfer unit 102 in the main control unit 101 may be implemented by the main control unit 101, so they are assigned to the main control unit 101 in FIG. 2.

All functions of the data transfer unit 102, such as the data transfer process scheduling function and the function of copying data between the auxiliary storage unit 107 and main storage unit 108, may be executed by the main control unit 101, or the data copying function may be executed by a component provided separately from the main control unit 101. If the data copying function is implemented by a component provided separately from the main control unit 101, the load on the main control unit 101 while the data transfer process is being executed changes. That configuration will be described later. Some or all of the functions of the data compression/decompression unit 103 of the main control unit 101 may similarly be implemented by component means provided separately from the main control unit 101. That changes the load on the main control unit 101 while the data decompression process is being executed at startup.

The operation input unit 110 is provided as a means for input of a power-on instruction from an operation performed by the user, but the main control unit 101 may also be configured to start the initialization process without the intervention of the operation input unit 110, at a startup time specified beforehand in a power-on instruction given to the main control unit 101, for example, in which case the operation input unit 110 is not required.

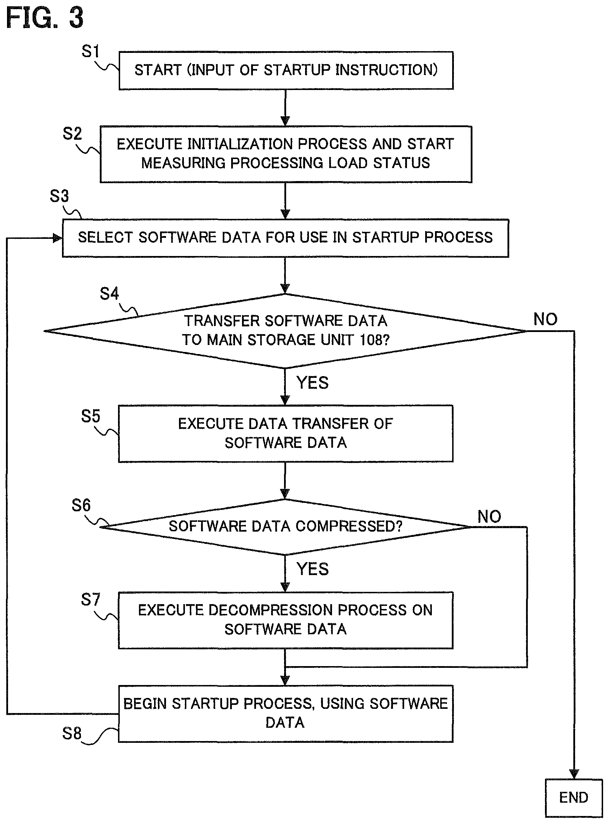

FIG. 3 is a flowchart illustrating the software startup process executed by the broadcast reception device according to the embodiment of the invention. In FIG. 3, when the user turns on the broadcast reception device 100, the operation input unit 110 receives a user-input startup instruction in step S1, and in step S2 the main control unit 101 (data transfer control unit) starts the initialization process that is needed for subsequent execution. The operation input unit 110 may be implemented as a button provided on the broadcast reception device 100, or it may be implemented by the remote control and its reception unit. In either case, the broadcast reception device 100 must be ready to receive the startup instruction from the operation input unit 110, which can mean that the main power supply is turned on, or alternatively that a startup control means separate from the main control unit 101 is provided to accept the user's startup instruction input from the operation input unit 110 and turn on the main power supply. Descriptions of startup instruction processing performed by means other than the main control unit 101 will be omitted; the process performed after the startup instruction is input to the main control unit 101 will be described next. If the startup time is specified beforehand, the main control unit 101 may start the initialization process at the specified time without the intervention of the operation input unit 110.

In step S2, the main control unit 101 executes an initialization process that is necessary for the execution of subsequent processes. In this step, the main control unit 101 activates the processing load measurement storage unit 104 (processing load information measurement unit) and starts measuring the load status of the main control unit 101 while the subsequent steps are executed. Information
about the load on the main control unit 101 over time, as measured by the processing load measurement storage unit 104, is stored in the main storage unit 108 or elsewhere.

In step S3, the main control unit 101 selects software data to be used in the startup process of the broadcast reception device 100. The software data may be selected in accordance with a transfer/decompression schedule that was created by the transfer/decompression scheduling unit 106 in the main control unit 101 during or before the most recent startup and is stored in the auxiliary storage unit 107; a list of software data stored in the auxiliary storage unit 107 may also be searched, and software data found in this way may be added for the selection.

Whether to perform a data transfer of the software data selected in step S3 from the auxiliary storage unit 107 to the main storage unit 108 is decided in step S4. If there are software data to be used in the startup process, step S5 is executed next. If the selected software data have already been transferred to the main storage unit 108 or if there were no software data to be selected, the startup process ends. When the startup process ends, measurement by the processing load measurement storage unit 104 ends. If there were no software data to be selected, the startup process is carried out only insofar as it can be executed with the initialization process by the main control unit 101 in step S2 alone. If there are multiple items of software data to be selected, then after steps S5 to S8 are executed, step S3 is executed again to select the software data to be launched next.

In step S5, data transfer of the corresponding software data from the auxiliary storage unit 107 to the main storage unit 108 is performed by using the functions of the data transfer unit 102 in the main control unit 101. The starting time of the data transfer process depends on the transfer/decompression schedule stored in the auxiliary storage unit 107. Whether the software data that have been transferred to the main storage unit 108 are compressed data is determined in step S6. If the data are compressed data, the decompression process for the corresponding software data is executed in step S7 at the decompression process starting time specified in the transfer/decompression schedule; if they are not compressed data, step S7 is skipped. In step S8, the startup process begins, using the software data that have been decompressed in the main storage unit 108 and are ready for the startup process. Then the process returns to step S3 in order to select the next item of software data to be used in the startup process.

To simplify the description, the flowchart in FIG. 3 shows the processes from step S4 to step S8 being performed once at a time, but multiple items of software data may be selected at the same time in step S3, and their data transfer, decompression, and startup processes may be started in parallel. If those processes are executed in parallel, arrangements may be made to vary the process starting times among the software data or to perform only a single data transfer/decompression process at a time, to avoid congestion of the starting times of the data transfer process, decompression process, and startup process among the multiple items of software data.

In the flowchart in FIG. 3, to simplify the description, step S5, which is the data transfer process for the software data, and step S7, which is the software data decompression process, are executed serially, but these processes can be parallelized. In that case, when the data transfer of part of the software data from the auxiliary storage unit 107 to the main storage unit 108 has been completed, the data transfer of the remaining software data is executed in parallel with the decompression process for the data for which the data transfer has been completed. The time needed for the overall data transfer in this configuration can be shorter than the time needed when the data transfer process and decompression process are executed serially.

It was stated that when the initialization process of the main control unit 101 is executed in step S2 in the flowchart in FIG. 3, the processing load measurement storage unit 104 in the main control unit 101 is activated and starts measuring the load status of the main control unit 101 while the subsequent steps are being executed, but the software data that activates the processing load measurement storage unit 104 can be transferred and launched first. In that configuration, the processing load over time related to only the first corresponding software data cannot be measured, but it becomes easier to make changes related to the startup process in the processing load measurement storage unit 104: for example, the place where the information about the processing load over time is kept can be changed as necessary.

If the flowchart in FIG. 3 is followed, the software data to be used in the startup process of the broadcast reception device 100 can be selected, the transfer of these data from the auxiliary storage unit 107 to the main storage unit 108 can be performed, the decompression process can be performed when necessary for compressed data, the startup process can be started, and in the meantime, information about the processing load on the main control unit 101 over time can be stored in the main storage unit 108 or elsewhere. Using this measured and stored information about the processing load on the main control unit 101 over time, a software data update process can be carried out in order to complete the data transfer process in a shorter time at the next startup.

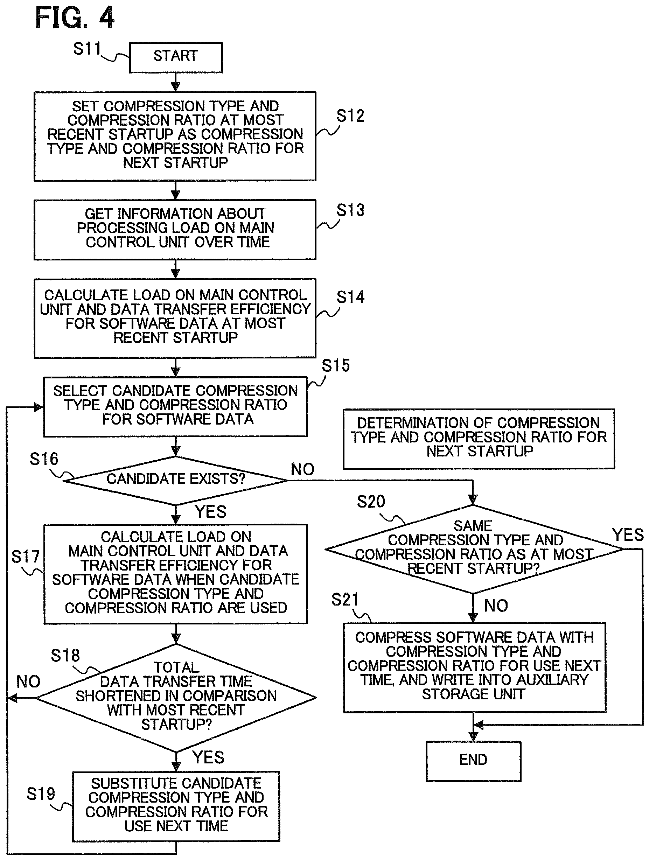

FIG. 4 is a flowchart illustrating the software update process executed by the broadcast reception device according to the embodiment of the invention. The software update process starts in step S11. The update process may be started at various timings, such as when the startup process of the broadcast reception device 100 has ended and the main control unit 101 has so little processing to do that it can now execute the next update process, or when the user turns off the broadcast reception device 100 and it therefore becomes unnecessary to provide the user with video data and audio data based on broadcast reception. In the software update process in the flowchart in FIG. 4, a single item of software data used in the startup process is selected, and the update is executed on the selected software data.

In step S12, the compression type and compression ratio of the software data at the most recent startup are obtained and provisionally set as the values to be used at the next startup. The compression type represents the type of the compression algorithm or compression tool to be used in compression or decompression, and the compression ratio represents the compression ratio to be used with the corresponding compression type. In some cases, a plurality of compression ratios can be specified for a single compression type. In step S13, the information about the processing load on the main control unit 101 over time stored in the main storage unit 108 or elsewhere is obtained. The information about the processing load on the main control unit 101 over time includes values of the load status of the main control unit 101 at successive times and information such as the starting times and ending times of the data transfer process and decompression process for the software data. In step S14, on the basis of the information about the processing load on the main control unit 101 over time at the most recent startup obtained in step S13, the load status of the main control unit 101, when the data transfer process from the auxiliary storage unit 107 to the main storage unit 108 was executed for the software data at the most recent startup and when the decompression process was executed for compressed software data, is analyzed, and the load on the main control unit and the data transfer efficiency are calculated for each process.

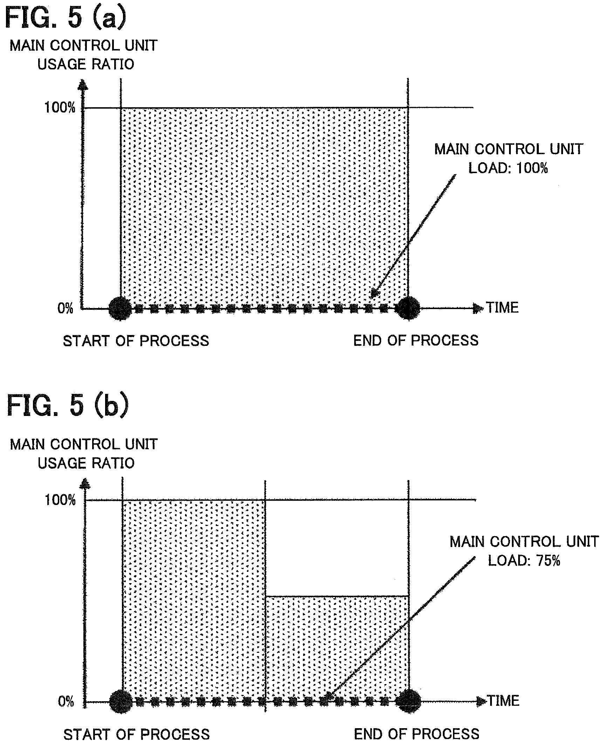

FIGs. 5(a) and 5(b) are explanatory diagrams illustrating the load on or usage ratio of the main control unit 101 of the broadcast reception device. The load on the main control unit calculated here is, for example, a cumulative value of the usage ratio of the main control unit 101 during a process. In FIG. 5(a), the usage ratio of the main control unit 101 during the process is always 100%, and the load on the main control unit during the process is calculated as 100%. In FIG. 5(b), the usage ratio is 100% for half of the time during the process and 50% in the remaining half of the time during the process, and the load on the main control unit during the process is calculated as 75%. If the execution of another new process is attempted while the load on the main control unit is high, it may take considerable time for the process to reach completion; conversely, when the load on the main control unit is low, the main control unit 101 has excess capacity with which to execute another new process.

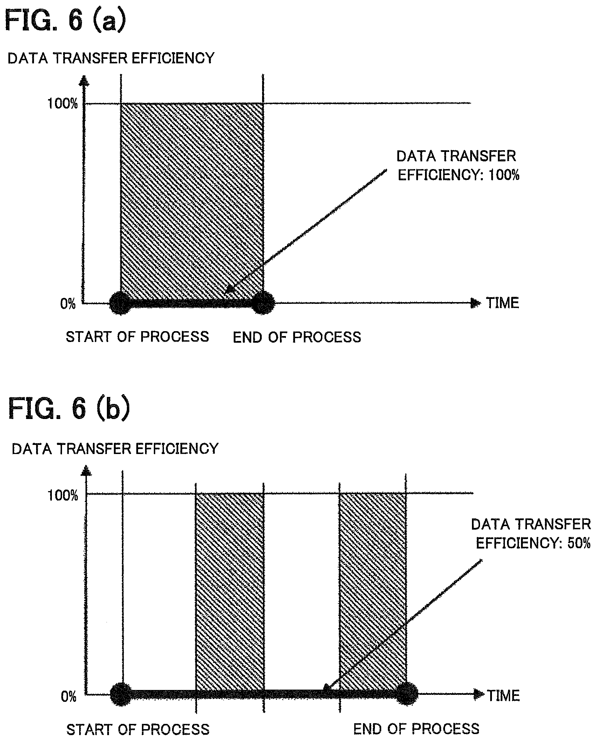

FIGs. 6(a) and 6(b) are explanatory diagrams illustrating the data transfer efficiency of the broadcast reception device. The data transfer efficiency calculated here is the proportion of the processing time during which data were actually transferred. In FIG. 6(a), data transfer processing is executed throughout the data transfer process from beginning to end, and the data transfer efficiency is calculated as 100%. In FIG. 6(b), actual data transfer processing is executed in only half of the time from the beginning to the end of the data transfer process, and the data transfer efficiency is calculated as 50%.

Next, in step S15 in the flowchart in FIG. 4, a candidate compression type and compression ratio to be applied to the corresponding software data at the next startup are selected (candidate selection process). If the broadcast reception device 100 has a single compression algorithm or compression tool, there are two choices, to compress or not to compress, and if the corresponding software data were compressed at the most recent startup, non-compression, or a compression ratio of 0%, is selected.

In step S16, whether there is a candidate is determined. If there is no candidate, the new candidate selection process stops, and the flow proceeds to step S20. If there is a candidate, the flow proceeds to step S17. If the compression ratio can be set in a variable manner, then it may be possible for candidate selection to proceed endlessly. In that case, a selection stop flag is set in the following step S18 to prevent the selection process from proceeding beyond a given limit; when the selection stop flag is set, the selection of a new candidate stops in step S16, and the
flow proceeds to step S20.

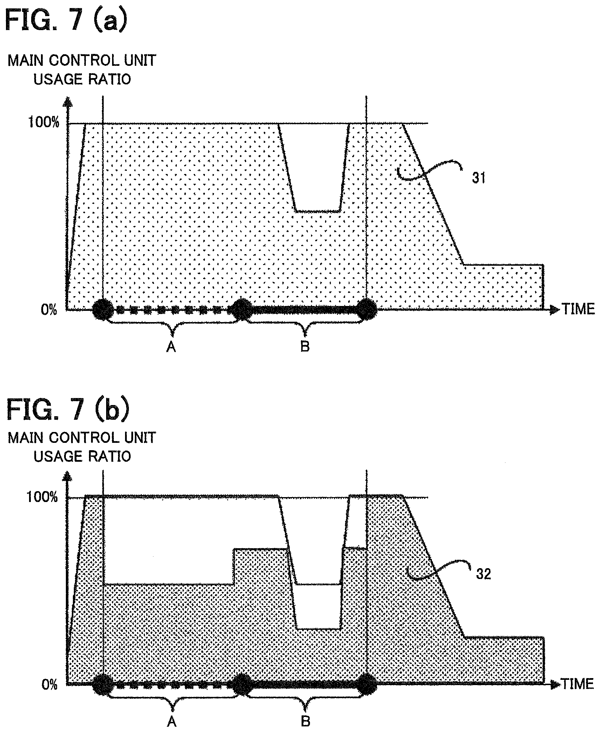

In step S17, the load on and data transfer efficiency of the main control unit when the newly selected candidate compression type and compression ratio are used are calculated (calculation process). After the compression type and compression ratio have been selected and the software data to be compressed have been identified, the load on and data transfer efficiency of the main control unit can be calculated by, for example, the following procedure. FIGs. 7(a) and 7(b) are explanatory diagrams showing information about the processing load in the broadcast reception device according to the first embodiment over time. FIG. 7(a) shows the processing load on the main control unit 101 over time at the most recent startup. In FIG. 7(a), reference characters 31 denote the processing load at the most recent startup. Section A represents the data transfer time of the corresponding software data, and section B represents the decompression time of the corresponding software data. When the broadcast reception device 100 is started up, the data transfer process and the initialization process are executed successively for the software data, and the usage ratio of the main control unit 101 increases or decreases by the concomitant amount of processing. The starting time and ending time of the data transfer process for the corresponding software data and the starting time and ending time of the decompression process for the corresponding software data are also measured as information about the processing load on the main control unit 101 over time, so the data transfer processing period and decompression processing period for the corresponding software data can be determined within this information.

From information such as the compression type and compression ratio used for the corresponding software data at the most recent startup, the size of the compressed software data, and the amount of data transferred from the auxiliary storage unit 107 to the main storage unit 108 per unit time, the processing load on the main control unit 101 during the data transfer process and during the decompression process when the data transfer process for the software data is executed without being affected by other processes is determined. FIG. 7(b) shows the difference obtained by deducting the determined processing load on the main control unit 101 pertaining to the data transfer process for the corresponding software data from the information about the measured processing load over time at the most recent startup. In FIG. 7(b), reference characters 32 denote the processing load obtained by deducting the data transfer and decompression of the corresponding software data from the processing load at the most recent startup. Section A represents the data transfer time of the corresponding software data, and section B represents the decompression time of the corresponding software data.

Next, from the information such as the compression type and compression ratio used for the corresponding software data at the most recent startup, the size of the compressed software data, and the amount of data transferred from the auxiliary storage unit 107 to the main storage unit 108 per unit time, the processing load on the main control unit 101 during the data transfer process and during the decompression process when the data transfer process for the software data is executed without being affected by other processes is determined. FIG. 7(b) shows the difference obtained by deducting the determined processing load on the main control unit 101 pertaining to the data transfer process for the corresponding software data from the information about the measured processing load over time at the most recent startup.

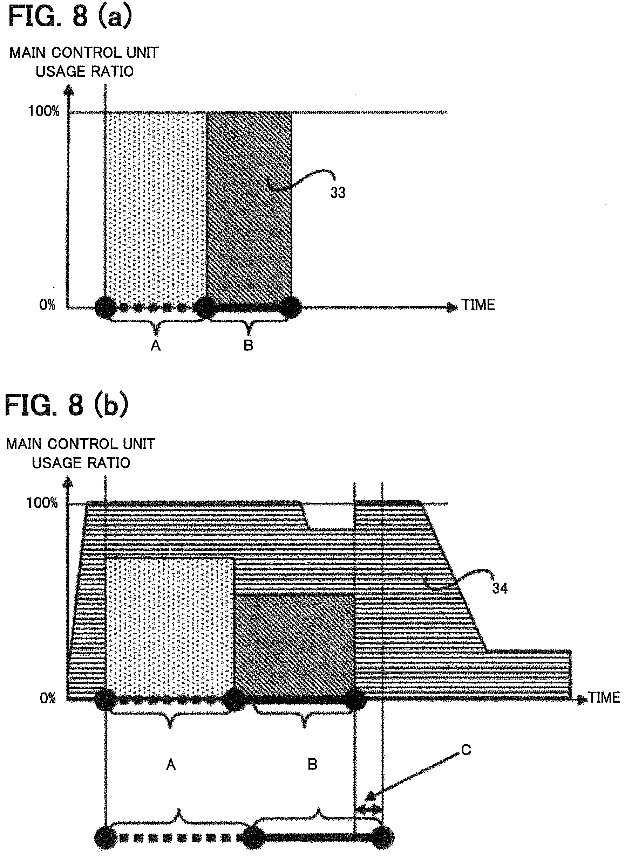

FIGs. 8(a) and 8(b) are explanatory diagrams showing information about the processing load over time when the compression type or compression ratio of the broadcast reception device according to the first embodiment is changed. FIG. 8(a) is a schematic diagram showing, as shown for the compression type and compression ratio of the corresponding software data used at the most recent startup, the processing load when the data transfer is executed by using a newly selected compression type and compression ratio. Reference characters 33 denote the data transfer and decompression processing load alone, with the selected compression type and compression ratio. Section A represents the data transfer time of the corresponding software data, and section B represents the decompression time of the corresponding software data. The compression process is first performed by applying the compression type and compression ratio selected for the corresponding software data, the compressed software data are generated, and the size of compressed software data is obtained. Then the decompression process is executed on the compressed software data, and the processing load on the main control unit 101 during the process is measured. Correct measurement is possible if the main control unit 101 is not executing any process other than the decompression process; if the main control unit 101 is executing another process, a rough estimate of the processing load with the effect of the other process removed can be obtained by repeating the measurement of the processing load in the decompression process several times. The processing load pertaining to the corresponding software data compressed by applying the newly selected compression type and compression ratio is thus determined as the time obtained by dividing the amount of computation performed by the main control unit 101 while the data transfer process and decompression process are being executed by the processing capacity of the main control unit 101.

Finally, the processing load of the data transfer process and decompression process alone when the newly selected compression type and compression ratio are used, as obtained in FIG. 8(a), is combined with the processing load on the main control unit 101 in processes other than the data transfer or decompression process, as obtained in FIG. 7(b). FIG. 8(b) is a diagram outlining the combined processing load and illustrating the difference in time from the data transfer process and decompression process at the most recent startup. Reference characters 34 denote the processing load obtained by combining the data transfer process and decompression process when the selected compression type and compression ratio are used. Section C represents the reduction in the overall data transfer processing time. The processing load obtained in FIG. 8(a) is essentially a relationship between the amount of computation done by the main control unit 101 and time, as described above, so it can be piggybacked easily on the processing load of the main control unit 101 in processes other than the data transfer process and decompression process by assigning the excess processing capacity of the main control unit 101.

In step S18 in FIG. 4, whether the overall data transfer processing time obtained by combining the data transfer processing time and decompression processing time is reduced, in comparison with the time at the most recent startup, by applying the newly selected compression type and compression ratio is determined. The execution time of the data transfer process and decompression process with the newly selected compression type and compression ratio can be compared with the execution time at the most recent startup as shown in FIG. 8(b): if the startup time at the most recent startup is shorter, the flow returns again to the selection process in step S15; if the startup time with the new selections is shorter, the flow proceeds to step S19 to substitute them as the candidate compression type and compression ratio at the next startup (determination process). The transfer/decompression scheduling unit 106 of the main control unit 101 revises the transfer/decompression schedule on the basis of a transfer process starting time and decompression process starting time suitable for the candidate compression type and compression ratio.

As described above, the compression types and compression ratios that can be executed by the broadcast reception device 100 are selected; the compression type and compression ratio with the shortest overall data transfer processing time for the corresponding software data are determined; and a transfer/decompression schedule appropriate for them can be obtained. After the candidate compression type and compression ratio to be used at the next startup have been determined, the process proceeds from step S16 to step S20. If the compression ratio can be set in a variable manner, then candidates can be selected limitlessly in step S15, but in this case, when the difference from the overall data transfer processing time with the current candidate compression type and compression ratio does not exceed a certain threshold value in step S18, instead of proceeding to step S19, the number of times this process has been performed may be incremented, and when it is determined in step S18 that the difference in time does not exceed the threshold value a certain number of times or more, instead of next selecting a new candidate compression type and compression ratio in step S15, the process can next proceed from step S16 to step S20.

In step S20 in FIG. 4, whether the candidate compression type and compression ratio for the next startup are the same as at the most recent startup is determined. If they are different, a process of compressing the corresponding software data with the candidate compression type and compression ratio for the next startup applied and writing the data into the auxiliary storage unit (data compression process) is executed in step S21. If it is determined in step S20 that they are the same, a new compression process is not executed for the corresponding software data.

As described above, when the procedure in the flowchart in FIG. 4 is executed, the data transfer process and decompression process for the software data can be executed in a shorter time at the next startup, in comparison with the most recent startup. If there are multiple items of software data to be used at the startup, the overall data transfer processing time for each item of software data can be reduced by applying this procedure to each item of software data.

If the procedure in the flowchart in FIG. 4 is executed in such a way as to make a determination for multiple items of software data simultaneously, the time can be reduced more efficiently. If the broadcast reception device 100 has four executable compression types and compression ratios and three software data items to be used at startup, for example, there are 4 × 4 × 4 or 64 combinations of compression types and compression ratios that could be applied to the three software data items. The processing load pertaining to the data transfer process and decompression process of the three software data items is deducted from the information about the processing load on the main control unit 101 over time at the most recent startup, as in FIG. 7(b), and the 64 combinations of compression types and compression ratios are combined with the processing load after this deduction. The combination of compression types and compression ratios with the shortest overall data transfer processing time for the three software data items is selected and applied at the next startup.

By measuring the information about the processing load on the main control unit 101 over time while the data transfer process and decompression process are being executed on the software data to be used at startup and by selecting the optimum compression type and compression ratio for the corresponding software data through the use of the measured time-wise information as described above, it becomes possible to execute the data transfer process and decompression process for the software data in a shorter time at the next startup than at the most recent startup.

In the first embodiment, if the broadcast reception device 100 supports a finite number of compression types and compression ratios and uses a finite number of software data items at startup, and if the startup procedure of the broadcast reception device 100 is the same, then there are a comparatively small, finite number of combinations of compression types and compression rates for each item of software data, and the broadcast reception device 100 can derive the shortest startup time from among the combinations by multiple repetitions of the procedure that determines the optimum compression type and compression ratio at the next startup in the flowchart in FIG. 4. Therefore, after the broadcast reception device 100 has derived the shortest startup time and changes in the compression process for the software data have ceased, by altering step S2 in the flowchart in FIG. 3 so as not to activate the processing load measurement storage unit 104 in the main control unit 101 and not to measure the load status of the main control unit 101 during the subsequent steps, the processing load on the main control unit 101 that arises from measurement of the load status of the main control unit 101 can be reduced and a corresponding amount of the processing done by the main control unit 101 can be assigned to the data transfer process, decompression process, and initialization process for the software data at startup, further shortening the startup time and markedly improving the user's convenience.

If the derived combination of compression types and compression ratios that minimize the startup times of the individual items of software data is always used, the software data of the program that executes the procedure illustrated in the flowchart in FIG. 4 can be eliminated, and with that much less software data, a still further shortening of the startup time can be anticipated, due to the reduced data transfer processing time.

Information processing devices and broadcast reception devices according to embodiments of the present invention can shorten the time until given functions become executable after power is switched on, even if the processing load on the CPU after power-on is high, and the effect of enabling a quick, high-speed startup can be obtained.

### Second Embodiment

In the first embodiment, the compression type and compression ratio were determined on the basis of the data transfer processing time and decompression processing time for each compression type or compression ratio. The startup time can be reduced further, however, by using the information about the processing load on the main control unit 101 over time to make these determinations. Some broadcast reception devices 100 have means that, like the DMA controller 3 and DMA scheduler 2 in FIG. 1, are specialized for data transfer processing. To simplify the subsequent description, it will be assumed that component means other than the main control unit 101 are provided for these data copying functions. This reduces the amount of processing performed by the main control unit 101 in data transfer processing. In particular, if the auxiliary storage unit is a memory such as a NOR flash memory that permits random access, the processing load on the main control unit 101 is reduced to a negligible level, so for simplicity, the processing load on the main control unit 101 while the data transfer process is being executed will be assumed to be zero.

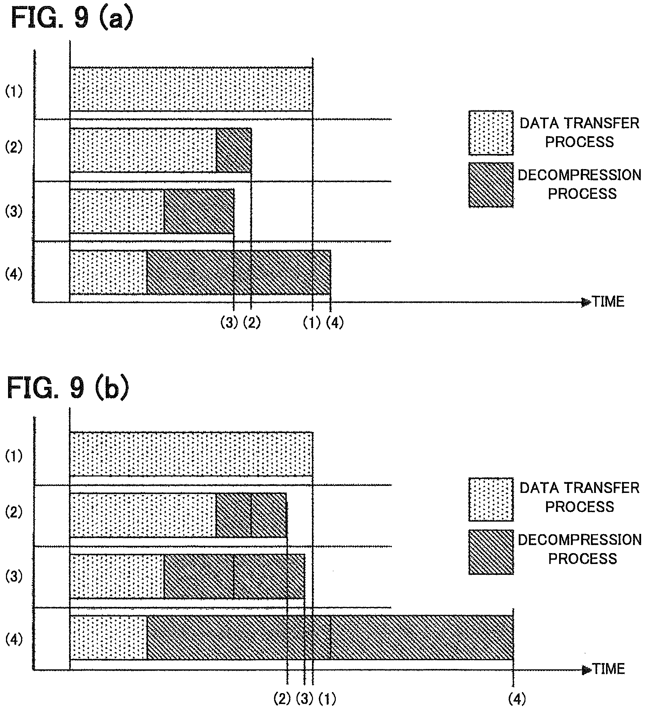

FIGs. 9(a) and 9(b) are explanatory diagrams illustrating processing time for different cases of compression type and compression ratio in a broadcast reception device according to the second embodiment. Taking four compression processes having different compression types and compression ratios, FIG. 9(a) shows temporal relationships when software data compressed by each of these compression processes are created, the process of data transfer from the auxiliary storage unit 107 to the main storage unit 108 is performed, and then the decompression process is performed. In FIG. 9(a), the compression process is not applied (non-compressed) in (1); among the three compression processes in (2) to (4), the compression ratio applied in (2) is lower than in (3) or (4), and the highest compression ratio is applied in (4). Time on the horizontal axis represents time when each compression process is executed alone, without performing any other process in the broadcast reception device 100. In general, a high compression ratio increases the amount of computation required for the compression process and decompression process, and increases the time required for the decompression process. Among the four compression processes, (3) gives the shortest total time for the data transfer and decompression processes, so if a simple time comparison is made among the compression processes, the total time for the data transfer process and decompression process is shortest in (3).

FIG. 9(b) is similar to FIG. 9(a), but it is assumed that another process is executed in the main control unit 101 of the broadcast reception device 100 throughout the time while the data transfer process and decompression process are being performed for the software data and that the usage ratio of the main control unit 101 for the other process is always 50%. Since the processing load on the main control unit 101 in the data transfer process is assumed to be negligible, the data transfer processing time is the same in FIGs. 9(a) and 9(b). In the decompression process for the compressed software data, however, twice as much time is taken to complete the same processing, because the main control unit 101 is only half available for use per unit time. In FIG. 9(b), the decompression processing time following use of each of the four compression processes is therefore double the time in FIG. 9(a). The total time for the data transfer process and decompression process is now shortest in (2) instead of (3). If information (such as the usage ratio) pertaining to the processing load on the main control unit 101 during the data transfer process and decompression process for software data has been measured and recorded in advance, by inferring, using the information, the time required for the main control unit 101 to execute the decompression process under this processing load with differing compression types and compression ratios and by determining the compression type and compression ratio with the shortest inferred time as the compression type and compression ratio to be applied to the software to be stored in the auxiliary storage unit, a compression type and compression ratio with a shorter time can be determined, in comparison with a determination based simply on the data transfer processing time and decompression processing time for each compression type and compression ratio.

The processing load on the computation unit (main control unit 101) while the decompression process is carried out for software data stored in a compressed state in the auxiliary storage unit is measured; the time required by the computation unit to execute the decompression process in the measured processing load state is inferred for each compression type and compression ratio; the compression type and compression ratio with the shortest inferred time are determined as the compression type and compression ratio to be applied to the software stored in the auxiliary storage unit; and the compression process using the determined compression type and compression ratio and the process of writing the software data compressed by executing the compression process into the auxiliary storage unit are executed. Accordingly, the total time, including the time for transfer of the software data from the nonvolatile memory to the random access memory and the decompression time, if the software data have been compressed, can be reduced. To simplify the description in the comparison of FIGs. 9(a) and 9(b), some assumptions have been made concerning a means specialized for the data transfer process provided outside the main control unit, and the usage ratio of the main control unit 101 in the data transfer, but those assumptions were only made to simplify the numerical description; similar effects can be obtained without these assumptions.

### REFERENCE CHARACTERS

1 CPU, 2 DMA scheduler, 3 DMA controller, 4 nonvolatile memory, 5 RAM, 6 remote control reception unit, 7 control button, 8 remote control, 11 tuner, 12 descrambler, 13 demultiplexer, 14 video information decoder, 15 audio information decoder, 16 data broadcast processor, 17 graphics generator, 18 video combiner, 19 video scaler, 20 analog converter, 100 broadcast reception device, 101 main control unit, 102 data transfer unit, 103 data compression/decompression unit, 104 processing load measurement storage unit, 105 compression process determination unit, 106 transfer/decompression scheduling unit, 107 auxiliary storage unit, 108 main storage unit, 110 operation input unit, 111 broadcast signal decoding unit, 112 audio-video output unit

## Claims

1. An information processing device (100) comprising:
a processing load information measurement unit (104) for measuring a processing load imposed by a transfer process and a decompression process when executed according to a given schedule by a computation unit (1), the transfer process including reading compressed software data from a first storage unit (107) in which the compressed software data are stored and, before the computation unit (1) executes the software data, writing the software data into a second storage unit (108) in which the software data are temporarily stored, the decompression process decompressing the software data read from the first storage unit (107);
a compression process determination unit (105) for, on a basis of processing load information obtained by measurement in the processing load information measurement unit (104), selecting a candidate compression type and compression ratio to be applied to the software data when written into the first storage unit (107), calculating the processing load on the computation unit (1) when the computation unit (1) executes the transfer process and the decompression process on the software data, to which the selected compression type and compression ratio have been applied, and calculating a data transfer efficiency, and determining that the selected compression type and compression ratio will be used in a compression process for compressing the software data if, from the calculated processing load and data transfer efficiency, data transfer time can be shortened, the data transfer efficiency being a proportion of a duration of the transfer process during which the software data were actually transferred; and
a data compression unit (103) for causing execution of the compression process using the compression type and compression ratio determined by the compression process determination unit (105) and a process of writing the compressed software data, on which the compression process has been executed, into the first storage unit (107).

2. The information processing device (100) of claim 1, further comprising a scheduling unit (106) for revising the schedule according to the compression type and compression ratio determined by the compression process determination unit (105).

3. The information processing device (100) of claim 2, wherein the compression process determination unit (105) is configured, when determining the compression type and compression ratio of the software data, to alter the compression ratio by using a plurality of differing compression algorithms.

4. The information processing device (100) of claim 2, configured such that, when the compression ratio determined by the compression process determination unit (105) is less than a particular threshold value, non-compressed software data are stored in the first storage unit (107).

5. The information processing device (100) of claim 2 wherein, when there are a plurality of items of software data, the compression process determination unit (105) is configured to determine a separate compression type and compression ratio for each item of software data.

6. The information processing device (100) of any preceding claim, further comprising:
a broadcast signal decoding unit (111) for decrypting a received broadcast signal, separating a video signal, an audio signal, and a data broadcast signal from the decrypted signal, and generating video information, audio information, and data broadcast screen information from the video signal, the audio signal, and the data broadcast signal; and
an audio-video output unit (112) for outputting the video information, the audio information, and the data broadcast screen information generated by the broadcast signal decoding unit (111), wherein
the first storage unit (107) is configured to store, in a compressed form, software data for driving the broadcast signal decoding unit (111) and the audio-video output unit (112), and
the computation unit (1) is configured to drive the broadcast signal decoding unit (111), the audio-video output unit (112), the first storage unit (107), and the second storage unit (108).

7. A software update method including:
a processing load information measurement process for measuring a processing load imposed by a transfer process and a decompression process when executed according to a given schedule by a computation unit (1), the transfer process including reading compressed software data from a first storage unit (107) in which the compressed software data are stored and, before the computation unit (1) executes the software data, writing the software data into a second storage unit (108) in which the software data are temporarily stored, the decompression process decompressing the software data read from the first storage unit (107);
a candidate selection process for, on a basis of processing load information obtained by measurement in the processing load information measurement process, selecting a candidate compression type and compression ratio to be applied to the software data when written into the first storage unit (107);
a calculation process for calculating the processing load on the computation unit (1) and a data transfer efficiency, the data transfer efficiency being a proportion of a duration of the transfer process during which the software data were actually transferred;
a determination process for determining that the selected compression type and compression ratio will be used in a process of compressing the software data if, from the processing load and the data transfer efficiency calculated by the calculation process, data transfer time can be shortened; and
a data compression process for causing execution of the compression process using the compression type and compression ratio determined by the compression process determination unit (105) and a process of writing the compressed software data, on which the compression process has been executed, into the first storage unit (107).

8. The software update method of claim 7, wherein the determination process revises the schedule according to the determined compression type and compression ratio.

9. The software update method of claim 8, wherein the determination process, when determining the compression type and compression ratio of the software data, alters the compression ratio by using a plurality of differing compression algorithms.

10. The software update method of claim 8 wherein, when the determined compression ratio is less than a particular threshold value, non-compressed software data are stored in the first storage unit (107).

11. The software update method of claim 8 wherein, when there are a plurality of items of software data, the determination process determines a separate compression type and compression ratio for each item of software data.

## Patentansprüche

1. Eine Informationsverarbeitungsvorrichtung (100) umfassend:
eine Verarbeitungslastinformationsmesseinheit (104) zum Messen einer von einem Übertragungsprozess und einem Dekompressionsprozess auferlegten Verarbeitungslast, wenn sie gemäß einem gegebenen Plan von einer Recheneinheit (1) ausgeführt wird, wobei der Übertragungsprozess das Lesen komprimierter Softwaredaten aus einer ersten Speichereinheit (107), in der die komprimierten Softwaredaten gespeichert sind, und vor dem Ausführen der Softwaredaten durch die Recheneinheit (1) das Schreiben der Softwaredaten in eine zweite Speichereinheit (108), in der die Softwaredaten zwischengespeichert sind, beinhaltet, wobei der Dekompressionsprozess die aus der ersten Speichereinheit (107) gelesenen Softwaredaten dekomprimiert;
eine Kompressionsprozessbestimmungseinheit (105), um auf der Grundlage von Verarbeitungslastinformationen, die durch Messung in der Verarbeitungslastinformationsmesseinheit (104) erhalten wurden, einen geeigneten Kompressionstyp und ein Kompressionsverhältnis auszuwählen, die auf die Softwaredaten anzuwenden sind, wenn sie in die erste Speichereinheit (107) geschrieben werden, die Verarbeitungslast auf die Berechnungseinheit (1) zu berechnen, wenn die Berechnungseinheit (1) den Übertragungsprozess und den Dekompressionsprozess auf die Softwaredaten ausführt, auf die der ausgewählte Kompressionstyp und das Kompressionsverhältnis angewendet wurden, und eine Datenübertragungseffizienz zu berechnen, und zu bestimmen, dass die ausgewählte Kompressionsart und das Kompressionsverhältnis in einem Komprimierungsprozess zum Komprimieren der Softwaredaten verwendet werden, wenn aus der berechneten Verarbeitungslast und der Datenübertragungseffizienz die Datenübertragungszeit verkürzt werden kann, wobei die Datenübertragungseffizienz ein Teil einer Dauer des Übertragungsprozesses ist, während der die Softwaredaten tatsächlich übertragen wurden; und
eine Datenkompressionseinheit (103) zum Auslösen der Ausführung des Kompressionsprozesses unter Verwendung der Kompressionsart und des Kompressionsverhältnisses, die durch die Kompressionsprozessbestimmungseinheit (105) bestimmt sind, und ein Verfahren zum Schreiben der komprimierten Softwaredaten, auf denen der Kompressionsprozess ausgeführt wurde, in die erste Speichereinheit (107).

2. Die Informationsverarbeitungsvorrichtung (100) gemäß Anspruch 1, ferner umfassend eine Planungseinheit (106), um den Plan entsprechend der von der Kompressionsprozessbestimmungseinheit (105) bestimmten Kompressionsart und dem Kompressionsverhältnis zu überarbeiten.

3. Die Informationsverarbeitungsvorrichtung (100) gemäß Anspruch 2, wobei die Kompressionsprozessbestimmungseinheit (105) konfiguriert ist, um beim Bestimmen der Kompressionsart und des Kompressionsverhältnisses der Softwaredaten das Kompressionsverhältnis unter Verwendung einer Vielzahl von unterschiedlichen Kompressionsalgorithmen zu ändern.

4. Die Informationsverarbeitungsvorrichtung (100) gemäß Anspruch 2, die so konfiguriert ist, dass, wenn das durch die Kompressionsprozessbestimmungseinheit (105) bestimmte Kompressionsverhältnis kleiner als ein bestimmter Schwellenwert ist, nicht-komprimierte Softwaredaten in der ersten Speichereinheit (107) gespeichert werden.

5. Informationsverarbeitungsvorrichtung (100) gemäß Anspruch 2, worin, wenn es eine Vielzahl von Softwaredaten gibt, die Kompressionsprozessbestimmungseinheit (105) konfiguriert ist, um einen separaten Kompressionstyp und ein separates Kompressionsverhältnis für jedes Softwaredatenelement zu bestimmen.

6. Die Informationsverarbeitungsvorrichtung (100) gemäß einem der vorhergehenden Ansprüche, ferner umfassend:
eine Rundfunksignaldekodierungseinheit (111) zum Entschlüsseln eines empfangenen Rundfunksignals, zum Trennen eines Videosignals, eines Audiosignals und eines Datenübertragungssignals von dem entschlüsselten Signal und zum Erzeugen von Videoinformationen, Audioinformationen und Datenübertragungsbildschirminformationen aus dem Videosignal, dem Audiosignal und dem Datenübertragungssignal; und
eine Audio-Video-Ausgabeeinheit (112) zum Ausgeben der Videoinformationen, der Audioinformationen und der von der Rundfunksignaldekodierungseinheit (111) erzeugten Datenübertragungsbildschirminformationen, wobei
die erste Speichereinheit (107) konfiguriert ist, um in komprimierter Form Softwaredaten zum Steuern der Rundfunksignaldekodierungseinheit (111) und der Audio-Video-Ausgabeeinheit (112) zu speichern, und
die Berechnungseinheit (1) konfiguriert ist, um die Rundfunksignaldekodierungseinheit (111), die Audio-Video-Ausgabeeinheit (112), die erste Speichereinheit (107) und die zweite Speichereinheit (108) anzusteuern.

7. Ein Softwareaktualisierungsverfahren, beinhaltend:
ein Verarbeitungslastinformationsmessverfahren zum Messen einer von einem Übertragungsprozess und einem Dekompressionsprozess auferlegten Verarbeitungslast, wenn es gemäß einem gegebenen Plan von einer Recheneinheit (1) ausgeführt wird, wobei der Übertragungsprozess das Lesen komprimierter Softwaredaten von einer ersten Speichereinheit (107), in der die komprimierten Softwaredaten gespeichert sind, und, bevor die Recheneinheit (1) die Softwaredaten ausführt, das Schreiben der Softwaredaten in eine zweite Speichereinheit (108), in der die Softwaredaten zwischengespeichert sind, beinhaltet, wobei der Dekompressionsprozess die von der ersten Speichereinheit (107) gelesenen Softwaredaten dekomprimiert;
ein Kandidatenauswahlverfahren zum Auswählen eines Kandidaten-Kompressionstyps und eines Kompressionsverhältnisses, das auf die Softwaredaten anzuwenden ist, wenn es in die erste Speichereinheit (107) geschrieben wird, auf der Grundlage von Verarbeitungslastinformationen, die durch Messung in dem Verarbeitungslastinformationsmessverfahren erhalten wurden;
einen Berechnungsprozess zum Berechnen der Verarbeitungslast auf die Recheneinheit (1) und eine Datenübertragungseffizienz, wobei die Datenübertragungseffizienz ein Verhältnis einer Dauer des Übertragungsprozesses ist, während der die Softwaredaten tatsächlich übertragen wurden;
ein Bestimmungsverfahren zum Bestimmen, dass die gewählte Kompressionsart und das gewählte Kompressionsverhältnis in einem Prozess der Komprimierung der Softwaredaten verwendet werden, wenn aus der Verarbeitungslast und der durch den Berechnungsprozess berechneten Datenübertragungseffizienz die Datenübertragungszeit verkürzt werden kann; und
ein Datenkompressionsverfahren zum Bewirken der Ausführung des Komprimierungsprozesses unter Verwendung der von der Komprimierungsprozessbestimmungseinheit (105) bestimmten Komprimierungsart und des Komprimierungsverhältnisses und ein Verfahren zum Schreiben der komprimierten Softwaredaten, auf denen der Komprimierungsprozess ausgeführt wurde, in die erste Speichereinheit (107).

8. Das Softwareaktualisierungsverfahren gemäß Anspruch 7, wobei das Bestimmungsverfahren den Plan gemäß der bestimmten Kompressionsart und dem bestimmten Kompressionsverhältnis überarbeitet.

9. Das Softwareaktualisierungsverfahren gemäß Anspruch 8, wobei das Bestimmungsverfahren, wenn es die Kompressionsart und das Kompressionsverhältnis der Softwaredaten bestimmt, das Kompressionsverhältnis unter Verwendung einer Vielzahl von unterschiedlichen Kompressionsalgorithmen ändert.

10. Das Softwareaktualisierungsverfahren gemäß Anspruch 8, wobei, wenn das bestimmte Kompressionsverhältnis kleiner als ein bestimmter Schwellenwert ist, nicht-komprimierte Softwaredaten in der ersten Speichereinheit (107) gespeichert werden.

11. Das Softwareaktualisierungsverfahren gemäß Anspruch 8, wobei, wenn es eine Vielzahl von Softwaredaten gibt, der Bestimmungsprozess einen separaten Kompressionstyp und ein separates Kompressionsverhältnis für jedes Softwaredatenelement bestimmt.

## Revendications

1. Dispositif de traitement de l'information (100) comprenant :
une unité de mesure d'informations de charge de traitement (104) pour mesurer une charge de traitement imposée par un processus de transfert et un processus de décompression quand ils sont exécutés selon une planification donnée par une unité de calcul (1), le processus de transfert incluant la lecture de données logicielles comprimées à partir d'une première unité de stockage (107) dans laquelle les données logicielles comprimées sont stockées et, avant que l'unité de calcul (1) n'exécute les données logicielles, l'écriture des données logicielles dans une seconde unité de stockage (108) dans laquelle les données logicielles sont stockées de façon temporaire, le processus de décompression décomprimant les données logicielles lues à partir de la première unité de stockage (107) ;
une unité de détermination de processus de compression (105) pour, sur une base de traitement d'informations de charge obtenues par mesure dans l'unité de mesure d'informations de charge de traitement (104), la sélection d'un type de compression et d'un taux de compression candidats à appliquer aux données logicielles quand elles sont écrites dans la première unité de stockage (107), le calcul de la charge de traitement sur l'unité de calcul (1) quand l'unité de calcul (1) exécute le processus de transfert et le processus de décompression sur les données logicielles, auxquelles le type de compression et le taux de compression sélectionnés ont été appliqués, et le calcul d'un rendement de transfert de données, et la détermination que le type de compression et le taux de compression sélectionnés seront utilisés dans un processus de compression pour comprimer les données logicielles si, à partir de la charge de traitement et du rendement de transfert de données calculés, un temps de transfert de données peut être raccourci, le rendement de transfert de données étant une proportion d'une durée du processus de transfert pendant lequel les données logicielles ont été réellement transférées ; et
une unité de compression de données (103) pour provoquer l'exécution du processus de compression en utilisant le type de compression et le taux de compression déterminés par l'unité de détermination de processus de compression (105) et un processus d'écriture des données logicielles comprimées, sur lesquelles le processus de compression a été exécuté, dans la première unité de stockage (107).

2. Dispositif de traitement de l'information (100) selon la revendication 1, comprenant en outre une unité de planification (106) pour réviser la planification selon le type de compression et le taux de compression déterminés par l'unité de détermination de processus de compression (105).

3. Dispositif de traitement de l'information (100) selon la revendication 2, dans lequel l'unité de détermination de processus de compression (105) est configurée, en déterminant le type de compression et le taux de compression des données logicielles, pour modifier le taux de compression en utilisant une pluralité d'algorithmes de compression différents.

4. Dispositif de traitement de l'information (100) selon la revendication 2, configuré de sorte que, lorsque le taux de compression déterminé par l'unité de détermination de processus de compression (105) est inférieur à une valeur de seuil particulière, des données logicielles non comprimées sont stockées dans la première unité de stockage (107).

5. Dispositif de traitement de l'information (100) selon la revendication 2 dans lequel, quand il y a une pluralité d'éléments de données logicielles, l'unité de détermination de processus de compression (105) est configurée pour déterminer un type de compression et un taux de compression distincts pour chaque élément de données logicielles.

6. Dispositif de traitement de l'information (100) selon n'importe quelle revendication précédente, comprenant en outre :
une unité de décodage de signal d'émission (111) pour déchiffrer un signal d'émission reçu, séparer un signal vidéo, un signal audio et un signal de diffusion de données du signal déchiffré, et produire des informations vidéo, des informations audio et des informations d'écran de diffusion de données à partir du signal vidéo, du signal audio et du signal de diffusion de données ; et
une unité de sortie audio-vidéo (112) pour sortir les informations vidéo, les informations audio et les informations d'écran de diffusion de données produites par l'unité de décodage de signal d'émission (111), dans lequel
la première unité de stockage (107) est configurée pour stocker, sous une forme comprimée, des données logicielles pour piloter l'unité de décodage de signal d'émission (111) et l'unité de sortie audio-vidéo (112), et
l'unité de calcul (1) est configurée pour piloter l'unité de décodage de signal d'émission (111), l'unité de sortie audio-vidéo (112), la première unité de stockage (107) et la seconde unité de stockage (108).

7. Procédé de mise à jour logicielle incluant :
un processus de mesure d'informations de charge de traitement pour mesurer une charge de traitement imposée par un processus de transfert et un processus de décompression quand ils sont exécutés selon une planification donnée par une unité de calcul (1), le processus de transfert incluant la lecture de données logicielles comprimées à partir d'une première unité de stockage (107) dans laquelle les données logicielles comprimées sont stockées et, avant que l'unité de calcul (1) n'exécute les données logicielles, l'écriture des données logicielles dans une seconde unité de stockage (108) dans laquelle les données logicielles sont temporairement stockées, le processus de décompression décomprimant les données logicielles lues à partir de la première unité de stockage (107) ;
un processus de sélection de candidat pour, sur une base d'informations de charge de traitement obtenues par une mesure dans le processus de mesure d'informations de charge de traitement, sélectionner un type de compression et un taux de compression candidats à appliquer aux données logicielles quand elles sont écrites dans la première unité de stockage (107) ;
un processus de calcul pour calculer la charge de traitement sur l'unité de calcul (1) et un rendement de transfert de données, le rendement de transfert de données étant une proportion d'une durée du processus de transfert pendant lequel les données logicielles ont été réellement transférées ;
un processus de détermination pour déterminer que le type de compression et le taux de compression sélectionnés seront utilisés dans un processus de compression des données logicielles si, à partir de la charge de traitement et du rendement de transfert de données calculés par le processus de calcul, le temps de transfert de données peut être raccourci ; et
un processus de compression de données pour provoquer l'exécution du processus de compression en utilisant le type de compression et le taux de compression déterminés par l'unité de détermination de processus de compression (105) et un processus d'écriture des données logicielles comprimées, sur lesquelles le processus de compression a été exécuté, dans la première unité de stockage (107).

8. Procédé de mise à jour logicielle selon la revendication 7, dans lequel le processus de détermination révise la planification selon le type de compression et le taux de compression déterminés.

9. Procédé de mise à jour logicielle selon la revendication 8, dans lequel le processus de détermination, en déterminant le type de compression et le taux de compression des données logicielles, modifie le taux de compression en utilisant une pluralité d'algorithmes de compression différents.

10. Procédé de mise à jour logicielle selon la revendication 8 dans lequel, lorsque le taux de compression déterminé est inférieur à une valeur de seuil particulière, des données logicielles non comprimées sont stockées dans la première unité de stockage (107).

11. Procédé de mise à jour logicielle selon la revendication 8 dans lequel, quand il y a une pluralité d'éléments de données logicielles, le processus de détermination détermine un type de compression et un taux de compression distincts pour chaque élément de données logicielles.
